# EUROPÄISCHE PATENTSCHRIFT

(11) **EP 1 799 594 B1**
(45) Veröffentlichungstag und Bekanntmachung des Hinweises auf die Patenterteilung: **25.06.2008**
(21) Anmeldenummer: 05782806.3
(22) Anmeldetag: 14.09.2005
(51) Int. Cl.: B65G 1/137

(54) **KOMMISSIONIERSYSTEM**
PICKING SYSTEM
SYSTEME DE PREPARATION DE COMMANDE

(30) Priorität: 14.09.2004 AT 15402004
(43) Veröffentlichungstag der Anmeldung: 27.06.2007
(73) Patentinhaber: KNAPP LOGISTIK AUTOMATION GMBH., 8075 Hart bei Graz (AT)
(72) Erfinder: FREUDELSPERGER, Karl, A-8075 Hart bei Graz (AT)
(74) Vertreter: Margotti, Herwig Franz
(86) Internationale Anmeldenummer: PCT/AT2005/000370
(87) Internationale Veröffentlichungsnummer: WO 2006/029433

(56) Entgegenhaltungen:
- DE-U- 8 025 777
- DE-U1- 20 010 615

## Beschreibung

Die Erfindung betrifft ein Verfahren zur Kommissionierung von Kundenaufträgen, gemäß dem Oberbegriff des Anspruchs 1. Insbesondere betrifft die Erfindung ein Kommissionierverfahren für ein halbautomatisches Kommissioniersystem.

Ein solches Verfahren ist aus dem Dokument DE 80 25 777 U bekannt.

Bei Kommissioniersystemen ist man häufig mit dem Problem einer unregelmäßigen Auslastung konfrontiert. Während im zeitlichen Mittel betrachtet die Auslastung des Kommissioniersystems durchaus moderat sein kann, so können Hochlastspitzen auftreten, in denen viele Produkte möglichst schnell kommissioniert werden müssen. Ein typisches Beispiel dafür ist ein Warenlager, aus dem zu festgelegten Zeiten Liefertouren mit bestellten Produkten abgehen. Für den Kunden ist es wichtig, dass er für eine Liefertour solange wie möglich Bestellungen, d.h. Kundenaufträge, im Lager abgeben kann. Gemäß dem Stand der Technik werden die Bestellungen eines Kunden erst nach dem Ablauf der Bestellzeit abgearbeitet, und zwar auf einmal, auch wenn der Kunde seine Bestellungen in mehreren Teilaufträgen getätigt hat. Da naturgemäß auch der Lagerbetreiber daran interessiert ist, möglichst lange Bestellzeiten anzubieten, um möglichst viele Kundenaufträge zu erhalten, führt diese bekannte Art der Abarbeitung von Bestellungen dazu, dass in der kurzen Zeit zwischen dem Ende der Bestellzeit und der Abfahrt der Liefertour Hochlastspitzen auftreten, die oftmals nicht zeitgerecht abgearbeitet werden können, was zu Verzögerungen bei der Auslieferung oder unvollständiger Bearbeitung von Kundenaufträgen führt, oder es müssen zeitliche Sicherheitsreserven zwischen Bestellschluss und Auslieferung eingeplant werden, die die Bestellzeit wiederum verkürzen.

Bei den bisherigen Kommissioniersystemen und Verfahren zu ihrem Betrieb bestehen auch kaum Optimierungsmöglichkeiten beim manuellen Kommissionieren der Waren, da von einer Person im Lager immer nur ein Auftrag auf einmal bearbeitet wird.

Der vorliegenden Erfindung liegt daher die Aufgabe zugrunde, ein Verfahren zur Kommissionierung von Kundenaufträgen bereitzustellen, mit dem es möglich ist, Hochlastspitzen in einem Kommissioniersystem weitgehend zu vermeiden, zumindest aber deutlich zu mildem und insgesamt zu einer gleichmäßigeren Auslastung des Kommissioniersystems und zu einer höheren Durchlaufgeschwindigkeit zu gelangen. Insbesondere soll es die vorliegende Erfindung ermöglichen, dass die Kommissionierer ungestört voneinander arbeiten können. Weiters soll eine Skalierung des Verfahrens in Abhängigkeit von der Arbeitslast durch Erhöhung oder Verringerung der Zahl der beschäftigten Kommissionierer erzielt werden.

Diese Aufgabe wird durch ein Verfahren zur Kommissionierung von Kundenaufträgen mit den Merkmalen des Anspruchs 1 gelöst. Vorteilhafte Ausgestaltungen der Erfindung sind in den Unteransprüchen dargelegt.

Das erfindungsgemäße Verfahren zur Kommissionierung von Kundenaufträgen zur Bereitstellung von Produkten in gewünschter Stückzahl umfasst die folgenden Schritte: das Zuordnen eines jeden Kundenauftrags zu zumindest einem Auftragsspeicherbehälter, das Holen der im Kundenauftrag angegebenen Produkte in der vorgegebenen Anzahl aus einem Hauptspeicher und Einsortieren der geholten Produkte in den zumindest einen dem Kundenauftrag zugeordneten Auftragsspeicherbehälter, und - für jeden Kundenauftrag - das Übergeben der im zumindest einen dem Kundenauftrag zugeordneten Auftragsspeicherbehälter zwischengespeicherten Produkte an einen Sammelförderer zu einem für den Kundenauftrag festgelegten Zeitpunkt. Zum Holen der Produkte aus dem Hauptspeicher werden Holaufträge für Kommissionierer erstellt, wobei ein Holauftrag die zu holenden Produkte und deren Anzahl umfasst, wobei die Produkte von mehreren Kundenaufträgen zusammenfassbar sind, die gemeinsam aus dem Hauptspeicher geholt und anschließend gemäß den Kundenaufträgen in die zugeordneten Auftragsspeicherbehälter einsortiert werden.

Erfindungsgemäß sind mehrere Auftragsspeicherbehälter zu einem Auftragsspeicherregal zusammengefasst und mehrere Auftragsspeicherregale entlang des Sammelförderers angeordnet, wobei vorzugsweise jedes Auftragsspeicherregal stets einem Kommissionierer zugeordnet wird. Die Auftragsspeicherregale können je nach Arbeitslast mit Kommissionierern besetzt werden. Durch diese Maßnahme können die Kommissionierer ungestört voneinander arbeiten, wobei das Verfahren auch eine Skalierung in Abhängigkeit von der Arbeitslast durch Erhöhung oder Verringerung der Zahl der beschäftigten Kommissionierer ermöglicht.

Das erfindungsgemäße Verfahren ermöglicht durch die Zwischenspeicherung der Produkte eines Kundenauftrags in Auftragsspeicherbehältern die weitgehende zeitliche Streckung der Abarbeitung der Kundenaufträge und eine Entkopplung des Holens der Produkte aus einem Hauptspeicher von der Übergabe dieser Produkte auf den Sammelförderer.

Die zeitliche Streckung der Abarbeitung der Kundenaufträge kann durch das Zulassen von Kundenteilaufträgen zusätzlich unterstützt werden, indem in einer Ausgestaltung der Erfindung vorgesehen wird, dass mehrere zusammengehörige Kundenteilaufträge zu einem Kundenauftrag zusammengefasst werden, dem zumindest ein Auftragsspeicherbehälter zugeordnet wird, wobei die Zusammengehörigkeit der Kundenteilaufträge aus Kundenauftragsidentifikationsmerkmalen, wie Kundenname, Kundenadresse, Kundennummer, Kundenauftragsnummer etc. ermittelbar ist. Somit kann der Lagerbetreiber eine gleichmäßigere Auslastung seines Kommissioniersystems erzielen, indem er dem Kunden einen Anreiz (z.B. Rabatte) bietet, nicht eine Gesamtbestellung zum letztmöglichen Zeitpunkt abzugeben, sondern möglichst frühzeitig Teilaufträge zu erteilen.

Damit in einem dem Kommissioniersystem nachgeordneten Versandbereich möglichst wenig Sortierarbeit anfällt, kann das Übergeben der im zumindest einen Auftragsspeicherbehälter zwischengespeicherten Produkte eines jeden Kundenauftrags an den Sammelförderer in einer solchen Reihenfolge erfolgen, dass die Sortierung in dem nachfolgenden Versandbereich minimiert ist. Beispielsweise können die Produkte der Kundenaufträge so auf den Sammelförderer übergeben werden, dass sie in einer "first in, last-out"-Reihenfolge in Lieferwägen eingeräumt werden, wobei diese Reihenfolge an die Liefertour des Wagens angepasst ist.

Das Holen der Produkte aus dem Hauptspeicher erfolgt zumeist manuell durch Kommissionierer. Um die Kommissionierer möglichst rationell zu beschäftigen und ihnen die Arbeitsbedingungen zu erleichtern, ist in einer Ausgestaltung der Erfindung vorgesehen, dass zum Holen der Produkte aus dem Hauptspeicher Holaufträge für Kommissionierer erstellt werden, wobei ein Holauftrag die zu holenden Produkte und deren Anzahl umfasst, wobei die Produkte von mehreren Kundenaufträgen zusammenfassbar sind, die gemeinsam aus dem Hauptspeicher geholt und anschließend gemäß den Kundenaufträgen in die zugeordneten Auftragsspeicherbehälter einsortiert werden. Das gemeinsame Holen von Produkten für mehrerer Kundenaufträge wird als "Produktbatchbildung" bezeichnet.

Es sei erwähnt, dass im Warenlager bzw. Kommissionierlager eingehende Kundenaufträge bzw. Kundenteilaufträge in mehrere Kommissionieraufträge zerlegt werden können, die in verschiedenen Bereichen des Warenlagers oder von verschiedenen Kommissionierern oder von einem Kommissionierer zu verschiedenen Zeiten abgearbeitet werden, wobei jeder Kommissionierauftrag die Kommissionierung zumindest eines Teils der im Kundenauftrag angeführten Produkte vorschreibt. In einem Holauftrag wiederum können Kommissionieraufträge für unterschiedliche Kundenaufträge zusammengefasst sein.

Eine rationelle Arbeitsweise der Kommissionierer kann erzielt werden, wenn die im Holauftrag aufgelisteten Produkte so gereiht werden, dass der Weg des Kommissionierers durch den Hauptspeicher minimiert wird. Dabei kann auch berücksichtigt werden, dass sich die Kommissionierer in den meist engen Gängen des Hauptspeichers nicht gegenseitig behindern sollen. Um dies zu erreichen, können die Kommissionierer im "round robin"-System durch den Hauptspeicher geführt werden.

Bei Eilig-Aufträgen, die möglichst schnell erledigt werden müssen, ist eine Wegoptimierung im Allgemeinen nicht angebracht. In einem solchen Fall sieht die Erfindung vielmehr vor, dass der Holauftrag jene Produkte umfasst, die zur Vervollständigung eines Kundenauftrags erforderlich sind, damit dieser möglichst schnell an den Sammelförderer übergeben werden kann.

Damit auch im Fall größerer Kundenaufträge keine unerwünscht große Länge des Sammelförderers erforderlich ist, ist in einer Variante der Erfindung vorgesehen, dass mehrere einem Kundenauftrag zugeordnete Auftragsspeicherbehälter auf verschiedene Auftragsspeicherregale verteilt sind. Bei Übergabe der in den Auftragsspeicherbehältern für einen Kundenauftrag gespeicherten Produkte auf den Sammelförderer werden die Produkte dieses Kundenauftrags auf mehrere Stellen des Sammelförderers verteilt.

Für den Fall, dass sich bei der Einsortierung der Produkte herausstellt, dass ein Auftragsspeicherbehälter nicht groß genug ist, um alle vorgesehenen Produkte aufzunehmen, ist weiters vorgesehen, dass der Kommissionierer die Zuteilung weiterer Auftragsspeicherbehälter zu einem Kundenauftrag anfordern kann.

Die wesentlichen Aspekte des erfindungsgemäßen Kommissioniersystem sind:
• Durch die Zuordnung von Kundenaufträgen zu kundenauftragsbezogenen Auftragsspeicherbehältern ist eine "Produktbatchbildung" möglich, d.h. der Kommissionierer kann die Produkte für mehrere Kundenaufträge gemeinsam aus einem Hauptspeicher holen und dann in die den jeweiligen Kundenaufträgen zugeordneten Auftragsspeicherbehälter verteilen, wo sie bis zur Übergabe auf einen Sammelförderer zwischengespeichert werden. Dies ermöglicht eine optimale Führung des Kommissionierpersonals beim Herbeibringen der Produkte aus dem Hauptspeicher.
• Es wird eine starke Reduktion von Arbeitschritten gegenüber herkömmlichen Kommissioniersystemen erzielt, vor allem durch kürzere und weniger Holwege (Kommissionierwege).
• Es findet eine Entkoppelung manueller Prozesse von automatischen Prozessen statt. Der unter Umständen zeitkritische "Auslieferungsteil", d.h. die Übergabe der im Kundenauftrag festgelegten Produkte auf den Hauptförderer und deren Versand, ist weitgehend entschärft, da hierfür nahezu nur mehr automatische Abläufe stattfinden und die Zusammenstellung der Produkte für die jeweiligen Kundenaufträge bereits zuvor innerhalb einer relativ großen Zeitspanne erledigt wurde.
• Alle involvierten Prozesse sind in deterministischer Zeit behandelbar.
• Das erfindungsgemäße Kommissioniersystem ist ein skalierbares System. Es ermöglicht die einfache Zugabe und Wegnahme von Ressourcen.
• Kundenaufträge sind in bestimmbarer Zeit zur Auslieferung verfügbar. Es gibt kaum Interaktionen von Aufträgen.
• Das System unterstützt ideal eine mögliche Transportbehältersortierung im Lager.

Das erfindungsgemäße Kommissioniersystem ist vorzugsweise als ein zweistufiges halbautomatisches Automatsystem ausgeführt.

Die erste Stufe ist eine manuelle Kommissionierstufe und umfasst das Befüllen der Auftragsspeicherbehälter. Dazu werden dem Kommissionierer von einem Leitrechner mittels (Funk-)Terminal Holaufträge übermittelt, die die Anzahl und Art der aus dem Hauptspeicher zu holenden Produkte enthalten, wobei die Produkte für mehrere Kundenaufträge zusammengefasst (gebatcht) werden. Der Kommissionierer kommissioniert (holt) daher produktbezogen aus dem Hauptspeicher und teilt die geholten Produkte kundenauftragsbezogen auf die Auftragsspeicherbehälter auf. Dabei wird der Kommissionierer zweckmäßig mittels RF-Handheldterminal geführt.

Die zweite Kommissionierstufe ist das automatische Kommissionieren der nach Kundenaufträgen geordneten Produkte aus den Auftragsspeicherbehältern auf einen Sammelförderer, wie z.B. ein zentrales Förderband. Das Kommissionieren auf den Sammelförderer erfolgt in einer für den nachfolgenden Versand der Kundenaufträge optimierten Reihenfolge. Dadurch wird die Zwischenlagerung der Produkte in den Auftragsspeicherbehältern für eine Vereinfachung der Versandsortierung genutzt. Dabei ist von besonderem Vorteil, dass durch die Auftragsbatchbildung eine automatische Kommissionierung auf den Sammelförderer in (frei) definierter Reihenfolge der Kundenaufträge erfolgen kann, wobei die Reihenfolge so gewählt wird, dass die Sortierung von Transportbehältern, die jeweils die Produkte für einen Kunden enthalten, für den Abtransport im Versand auf ein Minimum (optimal Null) reduziert werden kann.

Das erfindungsgemäße Kommissionierverfahren und -system wird im Folgenden anhand eines Ausführungsbeispieles erläutert, aus dem sich der mechanische Aufbau, die Hardware und Steuerung, sowie der Kommissionierablauf erklären. In den Zeichnungen zeigen:
Figur 1 eine perspektivische Ansicht eines Auftragsspeicherregals mit einer Vielzahl an Auftragsspeicherbehältern und eines Sammelförderers als Komponenten des erfindungsgemäßen Kommissioniersystems;
Figur 2 das Auftragsspeicherregal von Fig. 1 von der Seite des Sammelförderers aus gesehen;
Figur 3 eine Detailansicht der Auftragsspeicherbehälter;
Figur 4 eine Detailansicht des Öffnungs- und Schließmechanismus der Auftragsspeicherbehälter;
Figur 5 eine schematische Darstellung des gesamten erfindungsgemäßen Kommissioniersystems;
Figur 6 ein schematisches Layout eines erfindungsgemäßen Kommissioniersystems;
Figur 7 ein schematisches Layout eines Kommissionierlagers mit einem erfindungsgemäßen Kommissioniersystem;
Figur 8 ein Flussdiagramm für Holaufträge für einen Kommissionierer;
Figur 9 ein Flussdiagramm eines Kommissionierverfahrens gemäß der Erfindung.

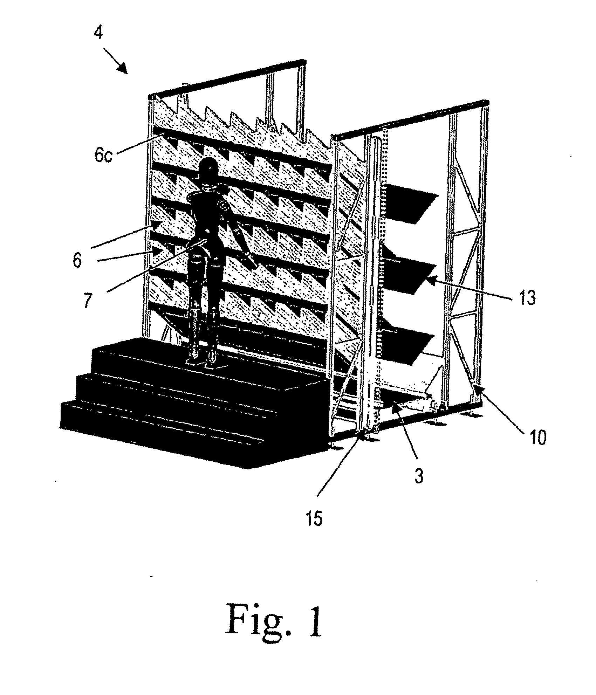

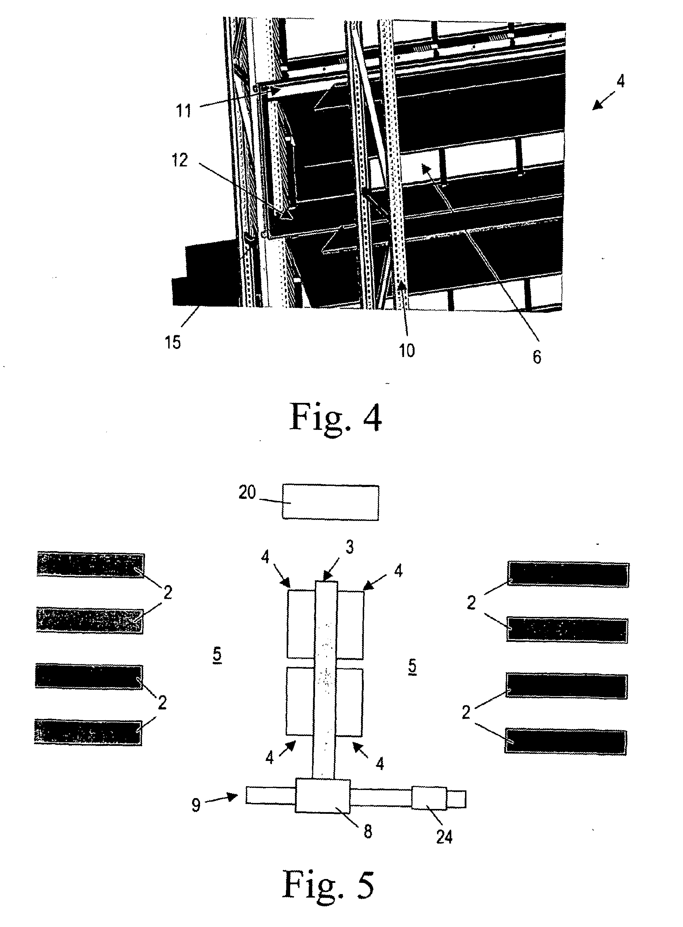

Zunächst auf Figur 5 Bezug nehmend, wird schematisch ein erfindungsgemäßes Kommissioniersystem 1 für die Abarbeitung des erfindungsgemäßen Verfahrens zur Kommissionierung von Kundenaufträgen erläutert. Das Kommissioniersystem 1 umfasst eine Vielzahl von Hauptspeichern 2, die in Form von statischen Vorratsregalen in zwei einander gegenüberliegenden Gruppen angeordnet sind. In der Zeichnung umfasst jede Gruppe vier Hauptspeicher 2, doch ist die Erfindung selbstverständlich nicht darauf beschränkt. Die Hauptspeicher 2 enthalten die von Kunden des Kommissionierlagers bestellbaren Produkte. Zwischen den beiden Gruppen an Hauptspeichern 2 befindet sich ein Sammelförderer 3 in Form eines zentralen Förderbands. Links und rechts sind am Sammelförderer 3 jeweils zwei Auftragsspeicherregale 4 angeordnet, die eine Vielzahl von Auftragsspeicherbehältern 6 aufweisen, wie in Figur 1 zu sehen. Der Platz zwischen den Auftragsspeicherregalen 4 und den Hauptspeichern 2 ist der Kommissionierbereich 5, in dem Kommissionierer 7 tätig sind, wenn sie sich nicht gerade in den Gängen zwischen den Hauptspeichern 2 bewegen, um Produkte aus den Hauptspeichern zu holen. Auf den Sammelförderer 3 kommissionierte Produkte werden in Behältern oder lose zu einer Übergabestation 8 transportiert, wo sie in Transportbehälter 24 abgegeben werden, die sich entlang einer Behälterstrecke 9 zu einem nicht dargestellten Versandbereich bewegen. Die Transportbehälter 24 erhalten möglicherweise auch noch aus anderen Bereichen des Kommissionierlagers für den Kundenauftrag benötigte Produkte, wenn der Kundenauftrag in mehrere Kommissionieraufträge zerlegt wurde. Das Kommissioniersystem 1 wird über einen oder mehrere Rechner 20 gesteuert, die auch hierarchisch (Leitrechner - Steuerrechner etc.) gegliedert sein können.

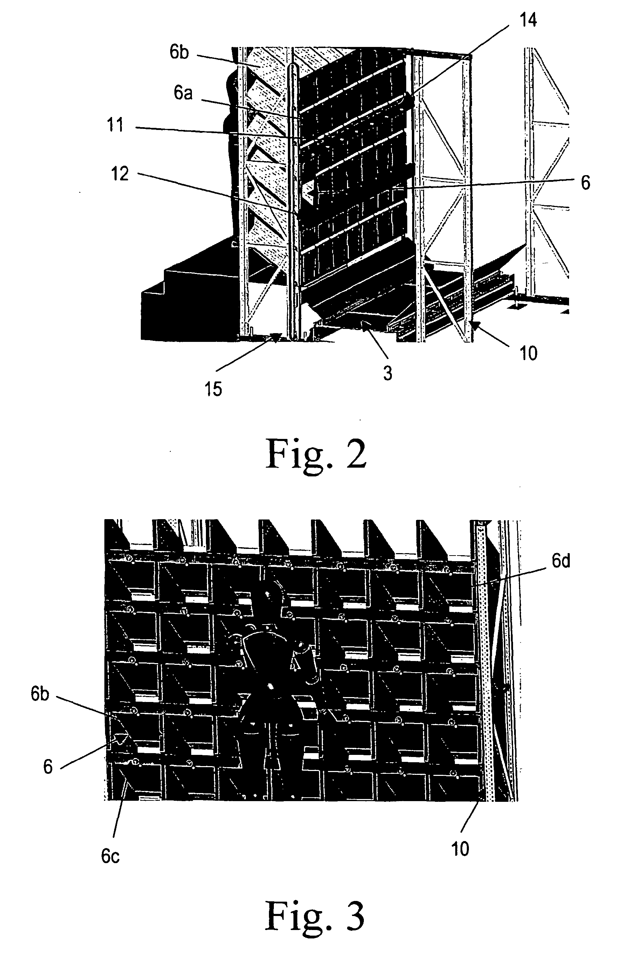

Figur 1 zeigt den mechanischen Aufbau eines am Sammelförderer angeordneten Auftragsspeicherregals 4 in der Perspektive vom nächstgelegenen Hauptspeicher aus gesehen. Figur 2 zeigt das Auftragsspeicherregal 4 von der Seite des Sammelförderers aus gesehen. Aus den Figuren 1 und 2 ist die mechanische Komponentengliederung des Auftragsspeicheregals 4 ersichtlich. Man erkennt einen Rahmen 10 und eine Vielzahl von Auftragsspeicherbehältern 6, die in einer Matrix von sieben Spalten und sechs Zeilen angeordnet und als Schalen mit einem zum Sammelförderer 3 hin geneigten Boden 6d ausgebildet sind. Die dem Sammelförderer 3 zugewandte Seitenwand 6a jedes Auftragsspeicherbehälters 6 ist durch als Hubmagneten 14 ausgebildete Aktuatoren mit vertikal verfahrbaren Querbalken 11 in Eingriff bringbar und dadurch vertikal nach oben und unten bewegbar, so dass der Auftragsspeicherbehälter 6 geöffnet und geschlossen werden kann. Bezugszeichen 15 bezeichnet das Antriebs- und Führungssystem für die vertikal verfahrbaren Querbalken 11. Bei Öffnen der Seitenwand 6a rutschen die im Auftragsspeicherbehälter 6 zwischengelagerten Produkte heraus und fallen, gebremst durch Kaskaden 12, 13 aus schräg gestellten Blechen auf den Sammelförderer 3 hinunter, wo sie zur Übergabestation 8 transportiert werden. Es sei erwähnt, dass die Seitenwände 6a z.B. auch mittels Scharnieren an den Auftragsspeicherbehältern 6 befestigt und motorisch auf- und zugeklappt werden können, wobei die Bewegungen der Seitenwände 6a durch einen Computer zeitlich so gesteuert werden, dass die Produkte eines jeweiligen Auftrags zu einem exakt definierten Zeitpunkt auf den Sammelförderer 3 fallen. Jeder Auftragsspeicherbehälter 6 umfasst weiters ein Gehäuse, gebildet aus dem Boden 6d und seitlichen Trennstegen 6b sowie ein Quittierleuchten- und -tastermodul 6c. Der Kommissionierer wird mittels der Quittierleuchte bei der kundenauftragsbezogenen Zuordnung der Produkte zum richtigen Auftragsspeicherbehälter 6 geführt. Mit dem Quittiertaster bestätigt der Kommissionierer für jede Auftragszeile seines Holauftrags manuell, dass er ein gemäß seinem Holauftrag aus dem Hauptspeicher 2 geholtes Produkt kundenauftragsbezogen, d.h. in der für einen bestimmten Kundenauftrag erforderlichen Stückzahl in den dem Kundenauftrag zugeordneten Auftragsspeicherbehälter 6 manuell eingeordnet hat.

Aus Figur 3 ist die Anordnung der Auftragsspeicherbehälter 6 im Rahmen 10 nebeneinander und reihenweise übereinander am besten zu sehen. Man erkennt auch die Anordnung der beweglichen Seitenwände 6a an den Trennstegen 6b.

Wie aus Figur 4 zu erkennen besteht das Querbalkensystem mit den integrierten Aktoren (Hubmagneten 14) aus einem Querbalken 11 und einem darunter angeordneten Kaskadenblech 12, das auch die Funktion eines Querbalkens hat. Der Abstand zwischen den beiden Querbalken ist in Abhängigkeit von der Ebenenteilung der Auftragsspeicherbehälter 6 im Auftragsspeicherregal 4 definiert.

Für das Kommissionieren der Kundenaufträge werden zumeist mehrere Kundenaufträge (bzw. die daraus gebildeten Kommissionieraufträge) zu Auftragsbatches zusammengefasst, die jeweils einem Kommissionierbereich 5 zugeteilt werden. Einem Kommissionierbereich 5 können mehrere Auftragsspeicherregale 4 zugeordnet sein. In jedem Kommissionierbereich 5 können mehrere Kommissionierer 7 arbeiten, wobei jedem Auftragsspeicherregal 4 im jeweiligen Kommissionierbereich 5 zu einem Zeitpunkt nur ein Kommissionier 7 zugeteilt sein soll, damit sich die Kommissionierer nicht gegenseitig bei der Arbeit behindern. Als eine Möglichkeit zur Bevorratung der Produkte im Kommissionierlager sind parallel zu den Auftragsspeicherregalen 4 Hauptspeicher 2 darstellende statische Regale angeordnet. Die Figur 5 zeigt eine mögliche Anordnungsvariante bei doppelseitiger Anordnung der Auftragsspeicherregale 4 am Sammelförderer 3.

Durch die Zuteilung der Kommissionierer 7 zu einem Kommissionierbereich 5 ist eine die Auftragsspeicherregale 4 übergreifende Optimierung der für die Abarbeitung der Auftragsbatches aus den Hauptspeichern 2 zu holenden Produkte möglich. Dadurch erfolgt eine Optimierung der Kommissionierwege in Abhängigkeit von den Produkt-Lagerorten in den Hauptspeichern 2 zum jeweiligen Auftragsspeicherregal 4.

Nachstehend wird ein Ausführungsbeispiel eines erfindungsgemäßen Kommissionierverfahrens erläutert:
Zum Kommissionieren werden dem Kommissionierer 7 Holaufträge mit den Produktdaten über Funk an sein Handheldterminal übermittelt und am Display des Handheldterminals zeilenweise angezeigt. Als zusätzliche Informationen können Lagerort der Bevorratung im Hauptspeicher 2 und die benötigte Stückzahl für einen Sammelrundgang im Hauptspeicher angezeigt werden, wobei für diesen Sammelrundgang des Kommissionierers die Produkte für mehrere Kundenaufträge (Auftragsbatches) zusammengefasst werden. Damit die Übermittlung des Holauftrags auf das Handheldterminal stattfindet, muss der Kommissionierer 7 in seinem ihm zugewiesenen Kommissionierbereich 5 angemeldet sein. Das Einsammeln der Produkte im Hauptspeicher 2 erfolgt mittels Funkunterstützung. Nach dem Einsammeln (Vorkommissionieren) einer definierten Anzahl verschiedener Produkte, wobei der Transport der Produkte zweckmäßig mit Hilfsmitteln (z.B. Schubwagen mit Rastereinteilung) erfolgt, meldet sich der Kommissionierer 7 an einem freien Auftragsspeicherregal 4 in dem ihm zugeordneten Kommissionierbereich 5 an. Als nächstes wird mittels Fingerscan des Handheldterminals ein erstes der gemäß dem Holauftrag geholten Produkte zur Produktidentifikation eingescannt.

Nach erfolgter Produkterkennung wird dem Kommissionierer 7 am Display seines Handheldterminals eine für das Einordnen in einem Auftragsspeicherbehälter 6 erforderliche Stückzahl des Produkts und am Auftragsspeicherregal 4 mittels der Signalleuchte am Quittiertaster 6c der mit dem Produkt zu befüllende Auftragsspeicherbehälter 6 angezeigt. Nach erfolgter manueller Befüllung des Auftragsspeicherbehälters 6 erfolgt eine manuelle Bestätigung des Kommissionierers am Quittiertaster 6c. Wird dasselbe Produkt für einen weiteren Kundenauftrag in diesem Auftragsspeicherregal 4 benötigt, so wird der Kommissionierer durch die Anzeige der nunmehr benötigten Stückzahl des Produkts am Display des Handheldterminals zum Befüllen des nächsten Auftragsspeicherbehälters 6 instruiert. Falls das aktuelle Produkt für keinen weiteren Kundenauftrag in diesem Auftragsspeicherregal 4 benötigt wird, wird dies dem Kommissionierer über das Display angezeigt. Ebenfalls wird dem Kommissionierer seine mögliche Zuordnung zu einem weiteren Auftragsspeicherregal 4 innerhalb des Kommissionierbereichs 5 angezeigt. Falls dieses Auftragsspeicherregal 4 frei ist, kann über eine Anmeldung am neuen Auftragsspeicherregal 4 das Produkt in gewünschter Stückzahl einem oder mehreren festgelegten Auftragsspeicherbehältern 6 zugeführt werden.

Es kann von Vorteil sein, alle aus dem Hauptspeicher 2 geholten Produkte kundenauftragsbezogen (d.h. durch Befüllen der den Kundenaufträgen zugeordneten Auftragsspeicherbehälter 6) in dem jeweiligen Auftragsspeicherregal 4 fertig abzuarbeiten, bevor sich der Kommissionierer einem anderen Auftragsspeicherregal 4 zuwendet. In diesem Fall wird, wenn alle für das aktuelle Auftragsspeicherregal 4 benötigten Produkte kommissioniert wurden, dies dem Kommissionierer 7 über das Display seines Handheldterminals angezeigt, worauf sich dieser dem nächsten freien Auftragsspeicherregal 4 zuwenden kann.

Zur Erkennung und der daraus resultierenden Zuordnungsmöglichkeit eines neuen Produktes zu einem Auftragsspeicherbehälter 6 ist dieses nächste Auftragsspeicherregal 4 wiederum mittels Fingerscan zu identifizieren. Der weitere Ablauf erfolgt wie oben beschrieben.

Das gesamte ablaufbezogene Führen des Kommissionierers inklusive Fehlermanagement erfolgt über das Display des Handheldterminals.

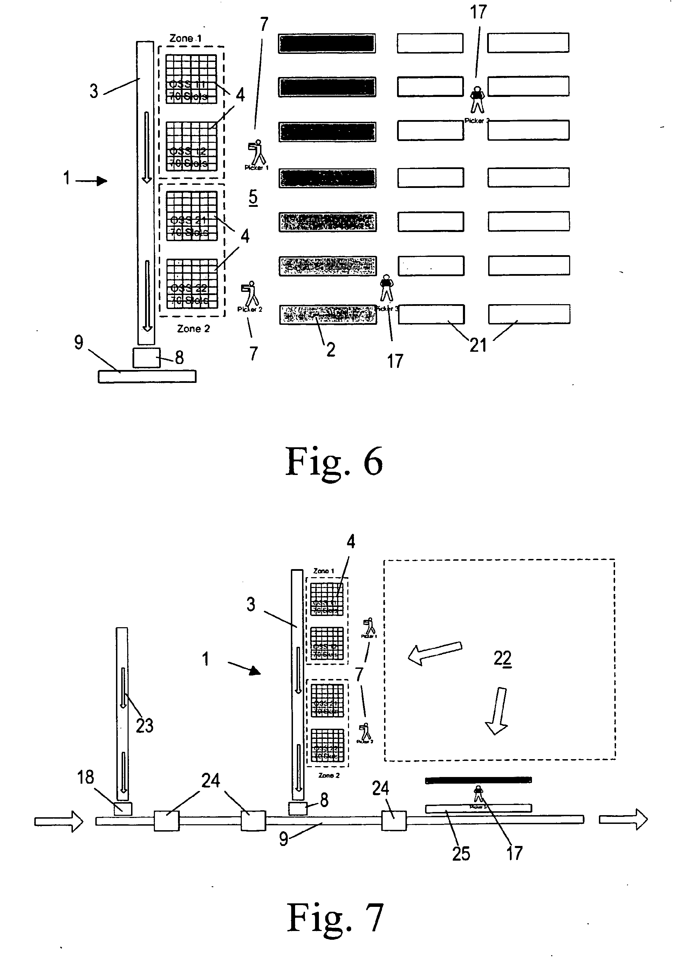

Figur 6 zeigt ein schematisches Layout eines erfindungsgemäßen Kommissioniersystems 1. Figur 7 zeigt ein schematisches Layout eines Kommissionierlagers, das ein Kommissioniersystem 1 umfasst. Das Kommissioniersystem 1 umfasst vier Auftragsspeicherregale 4, die an einer Seite eines als Zentralband ausgebildeten Sammelförderers 3 angeordnet sind, der die kommissionierten Produkte kundenauftragsweise zu einer Übergabestation 8 befördert, wo sie in Transportbehälter 24 übergeben werden, die sich entlang einer Behälterförderstrecke 9 bewegen. Das Kommissionierlager umfasst einen Warenbereich 22 (siehe Figur 7), der in Hauptspeicherregale 2, die den Auftragsspeicherregalen 4 benachbart sind, und weitere statische Regale 21 unterteilt ist, wobei zwischen den Hauptspeicherregalen 2 und den Auftragsspeicherregalen 4 ein Kommissionierbereich 5 definiert ist, in dem Kommissionierer 7 angemeldet sind. In den Hauptspeicherregalen 2 befinden sich B-Produkte, das sind Produkte die in mittlerer Häufigkeit nachgefragt werden. In den statischen Regalen 21 befinden sich C-Produkte bzw. langsam drehende Produkte, die selten nachgefragt werden. Diese werden von anderen Kommissionieren 17 geholt und an einer Übergabestation 25 händisch in die Transportbehälter 24 eingeordnet. Stromaufwärts vom Kommissioniersystem 1 ist ein Kommissionierautomat 23 für schnell drehende Produkte angeordnet, der die Produkte an einer Übergabestation 18 in die Transportbehälter 24 einordnet. Beispielsweise besteht jedes Auftragsspeicherregal 4 aus sieben Reihen und zehn Spalten von Auftragsspeicherbehältern. Dies ergibt pro Auftragsspeicherregal 4 Zwischenspeichermöglichkeiten für 70 potentielle Kundenaufträge. Die Auftragsspeicherregale 4 werden in Zonen zusammengefasst, die jeweils zwei Auftragsspeicherregale umfassen. Aus ergonomischen Gründen ist die Zuordnung von Kundenaufträgen zu Auftragsspeicherbehältern im Zentrum der Auftragsspeicherregale zu bevorzugen.

Grundsätzlich kristallisieren sich für die Abarbeitung der Kundenaufträge bzw. aus den Kundenaufträgen gebildete Kommissionieraufträge drei Kemprozesse heraus. Diese sind die Aufbereitung und das Kommissionieren der Kundenaufträge bzw. Kommissionieraufträge sowie der Abtransport der gemäß den Kundenaufträgen kommissionierten Produkte.

In der Aufbereitung sind alle Aktivitäten zusammengefasst, die sich mit der vernünftigen Belegung der Aufträge sowie mit der intelligenten Vorbereitung der Produktdaten beschäftigen.

Die Aufgabe der Kundenauftragszuordnung ist die Reservierung von Auftragsspeicherbehältern für Kundenaufträge. Da es als nicht zielführend zu betrachten ist, sofort mit der Abarbeitung der Kundenaufträge zu beginnen, teilt sich die Zuordnung in eine Startprozedur und in eine Ablaufprozedur.

Ein Leitrechner überprüft in definierbaren zeitlichen Abständen, ob eine definierte Anzahl von Kundenaufträgen existiert, deren Bestellzeit kleiner der aktuellen Simulationszeit ist. Sollte dies der Fall sein, so ordnet er diese Kundenaufträge gemäß dem Initialschema den einzelnen Auftragsspeicherbehältern in einem oder mehreren Auftragsspeicherregalen zu.

Während der Ablaufprozedur wird jeder Kundenauftrag, dessen Bestellzeit kleiner als der augenblickliche Simulationszeitpunkt ist, einem freien Auftragsspeicherbehälter zugeordnet. Hiezu wird das Zuteilungsschema verwendet.

### Regel:

• Als Initialschema wird folgende Prozedur verwendet. Zuerst wird die Anzahl N der angemeldeten Kommissionierer bestimmt. Falls N größer ist als die Anzahl der Auftragsspeicherregale in der Zone, muss N auf die Anzahl der Auftragsspeicherregale gesetzt werden. Es werden N beliebige Auftragsspeicherregale aus der Zone ausgewählt. In einem Round Robin Verfahren (d.h. der Reihe nach) werden die zuteilungsreifen Kundenaufträge (Bestellzeit kleiner aktuelle Simulationszeit) einzelnen Auftragsspeicherbehältern zugeordnet, wobei aus ergonomischen Gründen Auftragsspeicherbehälter im Zentrum der Auftragsspeicherregale zuerst belegt werden.
• Das Zuteilungsschema verteilt einen zuteilungsreifen Kundenauftrag bzw. Kommissionierauftrag in einer Zone nach dem Round Robin Prinzip, wobei auf eine gleichmäßige Belegung der Auftragsspeicherregale geachtet wird. Auch hier werden zentrale Auftragsspeicherregal-Positionen bevorzugt, um die Wege für den Kommissionierer kurz zu halten.
• Es kann der Fall eintreten, dass das Volumen des Auftragsspeicherbehälters für alle Produkte eines Kundenauftrags zu klein ist oder die Produkte zu schwer sind. In diesem Fall muss zumindest ein Folge-Auftragsspeicherbehälter für diesen Auftrag reserviert werden. Dieser Folge-Auftragsbehälter muss in einem anderen Auftragsspeicherregal reserviert werden, um die Bandlänge des Sammelförderers nicht unnötig groß auslegen zu müssen.
• Wenn kein Auftragsspeicherbehälter mehr frei ist, so muss ein fertig befüllter Auftragsspeicherbehälter durch Ingangsetzen eines Transportbehälters und Freigeben des Inhaltes des Auftragsspeicherbehälters auf den Sammelförderer frei gemacht werden. Sollte dies nicht möglich sein, so ist der Kundenauftrag zurück zu stellen.
• Auftragsteilung: Da es sich bei diesem Layout um eine beidseitige Anordnung von Auftragsspeicherregalen und Hauptspeichern in Bezug auf den Sammelförderer handelt, muss für jeden Kundenauftrag geprüft werden, ob er geteilt werden muss Dies ist dann notwendig, wenn für den Kundenauftrag Produkte aus den Hauptspeichern zu beiden Seiten des Sammelförderers kommissioniert werden müssen.

Das Initial- und Zuteilungsschema sind beispielhafte, aber nicht ausschließlicher Ansätze für das erfindungsgemäße Kommissionierverfahren.

### Aufbereiten von Produktaufträgen

Für jede Zone wird eine Liste von Produktaufträgen gewartet. Diese Liste gibt an, welche und wie viele Produkte in dieser Zone noch zu Holaufträgen umgewandelt werden müssen. Wenn ein neuer Kundenauftrag einem Auftragsspeicherbehälter zugeordnet wird, werden die benötigten Produkte für diesen Auftrag in diese Liste eingefügt. Dies erfolgt nach folgendem Schema:
• Falls das Produkt bereits in der Liste existiert, so wird der Produktzähler um die benötigte Anzahl erhöht.
• Ist das Produkt noch nicht in der Liste bekannt, so wird es in die Liste eingefügt und mit der benötigten Anzahl initialisiert.

### Sortierung Produktaufträge

Die Liste von Produktaufträgen wird in einem sortierten Zustand gehalten. Die dabei verwendete Sortierung orientiert sich nach der benötigten Produktanzahl:
Wenn man von der Anzahl der Stücke in dieser Liste auf die Gesamthäufigkeit schließen kann, so sollten hier Produkte bevorzugt werden, die eine kleine Stückanzahl haben. Der Vorteil ist zum einen, dass die Wahrscheinlichkeit, dass dieses Produkt noch einmal in den nächsten Kundenaufträgen vorkommt, geringer ist, als wenn man ein Produkt mit höherer Häufigkeit nimmt. Zum anderen wird der Holzeitpunkt eines "häufiger" benötigten Produktes nach hinten geschoben, was neuen Kundenaufträgen, die dieses Produkt benötigen, die Chance gibt, noch "ihre Stücke" zu platzieren.

### Holsequenzbestimmung

Ein Holauftrag ist eine Anforderung an einen Kommissionierer eine bestimmte Anzahl eines Produktes für eine Zone aus dem Hauptspeicher zu holen. Jeder Kommissionierer hat eine minimale und eine maximale "Transportkapazität", die von dem Produktvolumen, -gewicht und der Anzahl von verschiedenen Produkten sowie von der Beschaffenheit des ihm zur Verfügung stehenden Transportsystems abhängt.

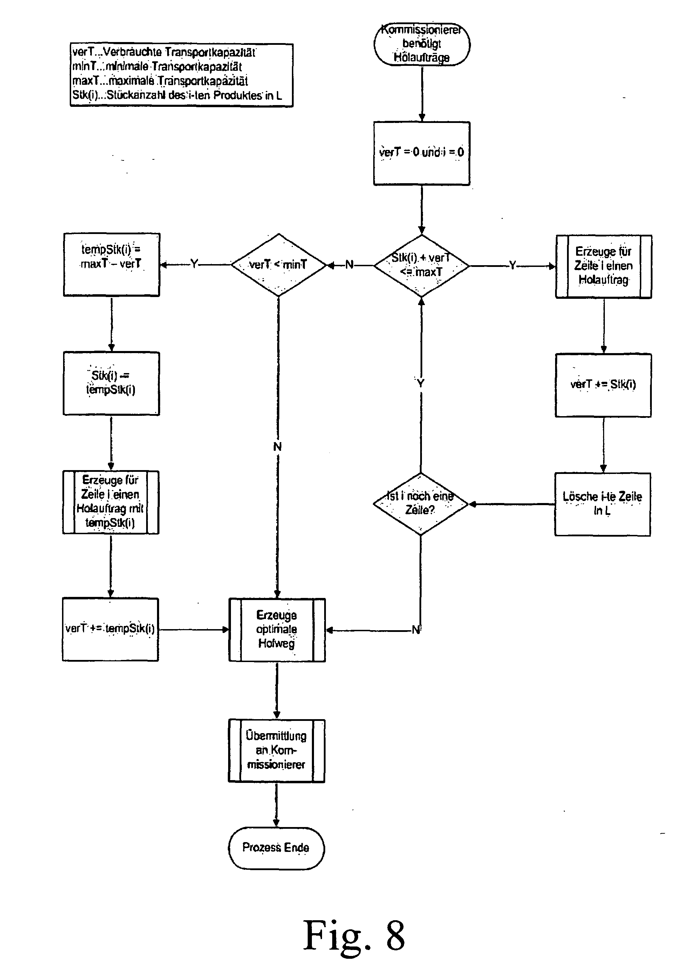

Die Erzeugung von Holaufträgen erfolgt nach dem Schema gemäß Fig. 8, wobei dieser Prozess exklusiv durchlaufen wird, wenn ein Kommissionierer bereit ist Produkte zu holen.

### Kommissionierung

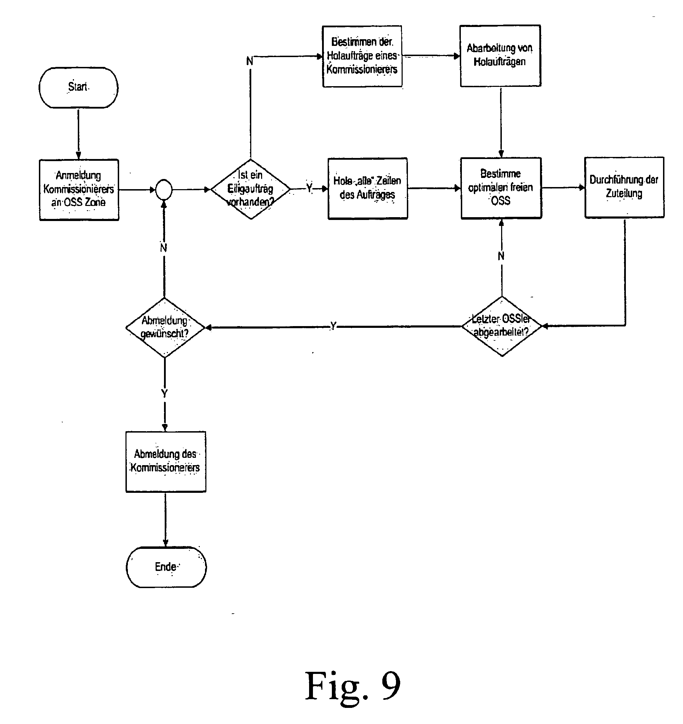

In Figur 9 ist ein Kommissionierschema dargestellt.

### Anmeldung des Kommissionierers

Der Kommissionierer muss sich bei Arbeitsbeginn an einer Kommissionierzone anmelden. Dies erfolgt über sein RF-Handterminal. Mit der Anmeldung ist es möglich, dem Kommissionierer Hol- und Zuordnungsaufträge zu übermitteln. Aus Sicht der Simulation wird mit dieser Anmeldung auch die individuelle minimale und maximale "Transportkapazität" in Stück beliebiger Produkte des Kommissionierers festgelegt.

### Holen der Waren

Der Kommissionierer bekommt für seine Zone Holaufträge zugeordnet. Jeder Holauftrag besteht aus den Produkten und ihrer benötigten Stückzahl. Sollte der Kommissionierer noch verfügbare Kapazitäten haben, so kann er noch weitere Holaufträge bekommen. Wenn ihm mehrere Holaufträge zugeteilt sind, muss eine zeitoptimale Route durch den Hauptspeicher zu den gelagerten Produkten gewählt werden.

### Regel

Es wird versucht die maximale "Transportkapazität" des Kommissionierers voll zu nutzen. Es kann, zufolge dieser Regel, zu Unterteilungen von Holaufträgen kommen. Dies ist jedoch nur bis zu einem bestimmten Punkt sinnvoll (Vergleich zu diesem Produktlagerplatz zu gehen vs. Produkte zu kommissionieren). Es wird auf jeden Fall ein Holauftrag für das nächste Produkt erzeugt, falls der aktuelle "Produktzähler" des Kommissionierers unterhalb seiner minimalen "Transportkapazität" liegt.

### Zuteilen der Produkte

Wenn der Kommissionierer alle Produkte gemäß seinen Holaufträgen aus dem Hauptspeicher geholt hat, kann er mit dem Kommissionieren, d.h. dem Einordnen der Produkte in die Auftragsspeicherbehälter, beginnen. Zu diesem Zwecke geht er von seiner letzten Holposition zu dem nächstgelegenen, am RF-Terminal angezeigten freien Auftragsspeicherregal und meldet sich dort über Funk an. Das Leitsystem stellt die erste Zeile (Produkt und Anzahl) auf dem RF-Handterminal dar und aktiviert die Leitleuchte am entsprechenden Auftragsspeicherbehälter. Der Kommissionierer nimmt die erforderliche Anzahl des Produkts und legt die Produkte in den Auftragsspeicherbehälter. Zur Bestätigung drückt er die Quittiertaste. Dieser Vorgang wird als Zuordnungsauftrag bezeichnet und wird solange durchgeführt, bis alle Produkte, die der Kommissionierer gemäß seinen Holaufträgen für dieses Auftragsspeicherregal mit sich führt, kommissioniert sind.

Der Kommissionierer erkennt am RF-Terminal, dass die Zuordnungsaufträge für dieses Regal abgearbeitet sind, indem ihm das RF-Handheldterminal dann entweder einen neuen Holauftrag gibt, falls es sich um den letzten Zuordnungsauftrag gehandelt hat, oder das nächste "unkommissionierte" Auftragsspeicherregal anzeigt, in dem weitere Zuordnungsaufträge durchzuführen sind.

### Abmeldung des Kommissionierers

Der Kommissionier hat nach Beendigung des letzten Zuordnungsauftrages die Möglichkeit sich aus der Zone abzumelden. Die ihm möglicherweise bereits angezeigten Holaufträge werden dann vom Leitsystem einem anderen Kommissionier zugeteilt

### Eiligaufträge

Ein Kundenauftrag wird beispielsweise zu einem Eiligauftrag, wenn die Abfahrtszeit eines Auslieferungsfahrzeugs abzüglich einer vorgegebenen Zeitspanne bereits kleiner ist als die aktuelle Zeit. Die vorgegebene Zeitspanne besteht hauptsächlich aus der Laufzeit der Produkte des Kundenauftrages vom Auftragsspeicherregal zu einem Versandbereich plus diverser Manipulationszeiten wie auch Sicherheitsreserven.
Das Ziel muss es sein diesen Kundenauftrag so schnell wie möglich fertig zu stellen. Dazu bekommt der nächste freie angemeldete Kommissionierer vom Leitrechner auf sein RF-Terminal Holaufträge übermittelt. Diese Holaufträge sind jedoch nicht wie in der normalen Betriebsweise gebatchte (d.h. gesammelte) Produktaufträge mit dem Fokus einige Produkte für viele Kundenaufträge zu holen (Wegoptimierungsprinzip), sondern wenige Kundenaufträge (einen Kundenauftrag) mit vielen (allen) Produkten zu bedienen, um die Kundenaufträge abzuschließen (Fertigstellungsprinzip).

### Abtransport der Kundenaufträge

### Sammelfördererreservierung

Die Sammelfördererreservierung, d.h. die Reservierung eines Abschnitts geeigneter Länge auf einem Sammelband für die Aufnahme der aus den Auftragsspeicherbehältern kundenauftragsweise abzugebenden Produkte, ist wichtig für die Gewährleistung, dass die auf dem reservierten Abschnitt des Sammelbandes beförderten Produkte tatsächlich zu einem Kundenauftrag gehören, und ist auch für die Geschwindigkeit des Systems wichtig. Primär wird die Länge des zur reservierenden Sammelbandabschnitts von der Fallhöhe der Produkte aus dem Auftragsspeicherbehälter (durch die Kaskaden hindurch) auf das Sammelband und von dem Sicherheitsabstand auf dem Sammelband bestimmt.

Es folgt ein Glossar der in der Beschreibung verwendeten spezifischen Begriffe.

### Eiligauftrag

Ist ein zeitkritischer Kundenauftrag.

### Holauftrag

Ein Holauftrag ist eine Anforderung an einen Kommissionierer zum Holen einer bestimmten Anzahl eines Produktes aus einem Hauptspeicher für Auftragsspeicherregale eine Zone.

### Kommissionierauftrag

Ein Kommissionierauftrag ist ein vom übergeordneten System aus einem Kundenauftrag abgeleiteter Auftrag, bestehend aus Auftragszeilen (Produkt, Stückzahl).

### Kundenauftrag

Ein Kundenauftrag umfasst eine Bestellliste von Produkten und ihrer Stückzahl von einem Kunden an ein Kommissionierlager zur Lieferung dieser Produkte innerhalb einer gewünschten Zeit.

### Produktauftrag

Der Leitrechner erzeugt aus eingeordneten Kundenaufträgen Produktaufträge. Diese sind Paare aus einem Produkt und der benötigten Stückzahl, welche jedoch noch keinem Kommissionier zugeordnet sind.

### Zone

Eine Zone ist eine Kombination von Auftragsspeicherregalen. Ein Kommissionierer ist ausschließlich für eine Zone zuständig. Eine zonenübergreifende Kommissionierung mit einem Kommissionierer ist nicht erwünscht.

### Zuordnungsauftrag

Ein Zuordnungsauftrag besteht aus einem Produkt, die für einen Kundenauftrag benötigte Stückzahl sowie einem Auftragsspeicherbehälter in einem Auftragsspeicherregal. Diese Information dient dem Kommissionierer zum effektiven Kommissionieren einer Auftragszeile.

## Patentansprüche

1. Verfahren zur Kommissionierung von Kundenaufträgen zur Bereitstellung von Produkten in gewünschter Stückzahl, umfassend das Zuordnen eines jeden Kundenauftrags zu zumindest einem Auftragsspeicherbehälter (6), das Holen der im Kundenauftrag angegebenen Produkte in der vorgegebenen Anzahl aus einem Hauptspeicher (2) und Einsortieren der geholten Produkte in den zumindest einen dem Kundenauftrag zugeordneten Auftragsspeicherbehälter (6), und - für jeden Kundenauftrag - das Übergeben der im zumindest einen dem Kundenauftrag zugeordneten Auftragsspeicherbehälter (6) zwischengespeicherten Produkte an einen Sammelförderer (3) zu einem für den Kundenauftrag festgelegten Zeitpunkt, wobei zum Holen der Produkte aus dem Hauptspeicher (2) Holaufträge für Kommissionierer (7) erstellt werden, wobei ein Holauftrag die zu holenden Produkte und deren Anzahl umfasst, wobei die Produkte von mehreren Kundenaufträgen zusammenfassbar sind, die gemeinsam aus dem Hauptspeicher (2) geholt und anschließend gemäß den Kundenaufträgen in die zugeordneten Auftragsspeicherbehälter (6) einsortiert werden, **dadurch gekennzeichnet, dass** mehrere Auftragsspeicherbehälter (6) zu einem Auftragsspeicherregal (4) zusammengefasst sind und mehrere Auftragsspeicherregale (4) entlang des Sammelförderers (3) angeordnet sind, wobei vorzugsweise jedes Auftragsspeicherregal zu einem Zeitpunkt einem Kommissionierer (7) zugeordnet wird.

2. Verfahren nach Anspruch 1, **dadurch gekennzeichnet, dass** mehrere zusammengehörige Kundenteilaufträge zu einem Kundenauftrag zusammengefasst werden, dem zumindest ein Auftragsspeicherbehälter (6) zugeordnet wird, wobei die Zusammengehörigkeit der Kundenteilaufträge aus Kundenauftragsidentifikationsmerkmalen, wie Kundenname, Kundenadresse, Kundennummer, Kundenauftragsnummer etc. ermittelbar ist.

3. Verfahren nach Anspruch 1 oder 2, **dadurch gekennzeichnet, dass** das Übergeben der im zumindest einen Auftragsspeicherbehälter (6) zwischengespeicherten Produkte eines jeden Kundenauftrags an den Sammelförderer (3) in einer solchen Reihenfolge der Kundenaufträge erfolgt, dass eine Sortierung in einem nachfolgenden Versandbereich minimiert wird.

4. Verfahren nach Anspruch 1, **dadurch gekennzeichnet, dass** die im Holauftrag aufgelisteten Produkte so gereiht werden, dass der Weg des Kommissionierers (7) durch den Hauptspeicher (2) minimiert wird.

5. Verfahren nach Anspruch 1, **dadurch gekennzeichnet, dass** der Holauftrag jene Produkte umfasst, die zur Vervollständigung eines Kundenauftrags erforderlich sind.

6. Verfahren nach einem der vorhergehenden Ansprüche, **dadurch gekennzeichnet, dass** mehrere einem Kundenauftrag zugeordnete Auftragsspeicherbehälter (6) auf verschiedene Auftragsspeicherregale (4) verteilt werden.

7. Verfahren nach einem der vorhergehenden Ansprüche, **dadurch gekennzeichnet, dass** der Kommissionierer (7) die Zuteilung weiterer Auftragsspeicherbehälter (6) zu einem Kundenauftrag anfordern kann.

## Claims

1. A process for commissioning customer orders for placing products ready in a desired number of pieces, comprising assigning each customer order to at least one order storage container (6), fetching the products as specified in the customer order in the specified number of pieces from a main store (2) and putting the products fetched into the at least one order storage container (6) assigned to the customer order and - for each customer order - transferring the products temporarily stored in the at least one order storage container (6) assigned to the customer order to a collective conveyor (3) at a time fixed for the customer order, wherein fetching orders for commissioners (7) are drawn up for fetching the products from the main store (2), one fetching order comprising the products to be fetched and their number of pieces, it being possible to combine the products of several customer orders, which are fetched from the main store (2) together and are subsequently put into the assigned order storage containers (6) in accordance with the customer orders, **characterized in that** several order storage containers (6) are combined to one order storage shelf (4) and that several order storage shelves (4) are arranged along the collective conveyor (3), each order storage shelf preferably being assigned to one commissioner (7) at a time.

2. The process according to claim 1, **characterized in that** several partial customer orders belonging together are combined to one customer order to which at least one order storage container (6) is assigned, the fact of the partial customer orders belonging together being establishable on the basis of customer order identification features, like customer name, customer address, customer number, customer order number, etc..

3. The process according to claim 1 or 2, **characterized in that** the products of each customer order temporarily stored in the at least one order storage container (6) are transferred to the collective conveyor (3) in such a sequence of customer orders as to minimize the sorting work in a subsequent dispatch section.

4. The process according to claim 1, **characterized in that** the products listed in the fetching order are arranged in such a sequence as to minimize the distance covered by the commissioner (7) on his way through the main store (2).

5. The process according to claim 1, **characterized in that** the fetching order comprises those products required for completing a customer order.

6. The process according to any of the preceding claims, **characterized in that** several order storage containers (6) assigned to one customer order are distributed over several order storage shelves (4).

7. The process according to any of the preceding claims, **characterized in that** the commissioner (7) may request that additional order storage containers (6) be assigned to a customer order.

## Revendications

1. Procédé pour le traitement de commandes clients pour la préparation de produits en nombre unitaire souhaité, comprenant d'associer chaque commande client à au moins un récipient de réception de commande (6), de rechercher les produits indiqués dans la commande client dans le nombre donné à partir d'un stockage principal (2) et le classement des produits cherchés dans ledit au moins un récipient de réception de commande (6) associé à la commande client et, pour chaque commande client, de transmettre les produits stockés de façon intermédiaire dans ledit au moins un récipient de réception de commande (6) associé à la commande client vers un convoyeur de collecte (3) à un instant fixé pour la commande client, dans lequel, pour la recherche des produits depuis le stockage principal (2) on établit des ordres de recherche pour des préparateurs (7), un ordre de recherche englobant les produits à rechercher et leur nombre, dans lequel les produits de plusieurs commandes clients peuvent être regroupés, qui sont cherchés conjointement depuis le stockage principal (2) et ensuite triés selon les commandes clients dans les récipients de réception de commande (6) associés, **caractérisé en ce que** plusieurs récipients de réception de commande (6) sont regroupés en une étagère de réception de commande (4), et plusieurs étagères de réception de commande (4) sont agencées le long du convoyeur de collecte (3), et chaque étagère de réception de commande est de préférence attribuée à un instant à un préparateur (7).

2. Procédé selon la revendication 1, **caractérisé en ce que** plusieurs commandes partielles groupées d'un client sont groupées en une commande client qui est associée à au moins un récipient de réception de commande (6), le groupage des commandes partielles d'un client pouvant être déterminé à partir de caractéristiques d'identification de commande client, comme le nom du client, l'adresse du client, le numéro de client, le numéro de commande client, etc.

3. Procédé selon la revendication 1 ou 2, **caractérisé en ce que** la transmission des produits, stockés de manière intermédiaire dans ledit au moins un récipient de réception de commande (6), de chaque commande client vers le convoyeur de collecte (3) a lieu suivant une succession des commandes clients telle qu'un triage dans une zone d'expédition successive est minimisé.

4. Procédé selon la revendication 1, **caractérisé en ce que** les produits listés dans l'ordre de recherche sont rangés de manière à minimiser le trajet du préparateur (7) à travers le stockage principal (2).

5. Procédé selon la revendication 1, **caractérisé en ce que** l'ordre de recherche comprend ceux des produits qui sont nécessaires pour compléter une commande client.

6. Procédé selon l'une des revendications précédentes, **caractérisé en ce que** plusieurs récipients de réception de commande (6) associés à une commande client sont répartis sur diverses étagères de réception de commande (4).

7. Procédé selon l'une des revendications précédentes, **caractérisé en ce que** le préparateur (7) peut requérir l'attribution d'autres récipients de réception de commande (6) à une commande client.
